# EUROPÄISCHE PATENTANMELDUNG

(11) **EP 4 166 302 A1**
(43) Veröffentlichungstag der Anmeldung: **19.04.2023**
(21) Anmeldenummer: 22199647.3
(22) Anmeldetag: 04.10.2022
(51) Int. Cl.: B29C 48/25, B29C 48/40, F16H 1/08, F16H 1/22, F16H 57/12

(54) **EXTRUDERGETRIEBE FÜR DIE FERTIGUNG ELEKTRISCHER BATTERIEN**

(30) Priorität: 12.10.2021 AT 508142021
(71) Anmelder: Eisenbeiss GmbH, 4470 Enns (AT)
(72) Erfinder: WAHLMÜLLER, Markus, 4312 Ried in der Riedmark (AT)
(74) Vertreter: KLIMENT & HENHAPEL

(57) **Zusammenfassung**

Extrudergetriebe (3) für einen Doppelschneckenextruder mit einer antriebsseitigen Eingangsstufe (ES) umfassend ein Antriebsstirnrad (10), das mit einem eine erste Abtriebswelle (5a) antreibenden, ersten Abtriebsstirnrad (11) kämmt, mit einer Verteilerstufe (VS) umfassend ein auf der ersten Abtriebswelle (5a) angeordnetes Verteilerantriebsstirnrad (12), das mit einem eine erste Verteilerwelle (13) antreibenden, ersten Verteilerstirnrad (14) sowie mit einem eine zweite Verteilerwelle (15) antreibenden, zweiten Verteilerstirnrad (16) kämmt, und einer extruderseitigen Ausgangsstufe (AS) umfassend ein erstes Ausgangsstirnrad (17) auf der ersten Verteilerwelle (13) sowie ein zweites Ausgangsstirnrad (18) auf der zweiten Verteilerwelle (15), die jeweils mit dem zweiten Abtriebsstirnrad (19) kämmen. Erfindungsgemäß wird vorgeschlagen, dass der Schrägungswinkel der Schrägverzahnung am zweiten Abtriebsstirnrad (19) weniger als 15° beträgt und die Schrägungsrichtung am zweiten Abtriebsstirnrad (19) so gewählt ist, dass bei einer vorgegebenen Drehrichtung getriebebedingte Axialkräfte in der zweiten Abtriebswelle (5b) in Richtung der antriebsseitigen Eingangsstufe (ES) orientiert sind.

## Beschreibung

Die Erfindung betrifft ein Extrudergetriebe für einen Doppelschneckenextruder mit einer antriebsseitigen Eingangsstufe umfassend ein Antriebsstirnrad, das mit einem eine erste Abtriebswelle antreibenden, ersten Abtriebsstirnrad in Schrägverzahnung kämmt, mit einer Verteilerstufe umfassend ein auf der ersten Abtriebswelle angeordnetes Verteilerantriebsstirnrad, das mit einem eine erste Verteilerwelle antreibenden, ersten Verteilerstirnrad in Schrägverzahnung kämmt sowie mit einem eine zweite Verteilerwelle antreibenden, zweiten Verteilerstirnrad in Schrägverzahnung kämmt, und einer extruderseitigen Ausgangsstufe umfassend ein auf der ersten Verteilerwelle angeordnetes, erstes Ausgangsstirnrad, das mit einem eine zweite Abtriebswelle antreibenden, zweiten Abtriebsstirnrad in Schrägverzahnung kämmt sowie ein auf der zweiten Verteilerwelle angeordnetes, zweites Ausgangsstirnrad, das mit dem zweiten Abtriebsstirnrad in Schrägverzahnung kämmt, wobei die Drehachsen der ersten Abtriebswelle, der ersten und zweiten Verteilerwelle sowie der zweiten Abtriebswelle parallel zueinander angeordnet sind, gemäß dem Oberbegriff von Anspruch 1.

Die Extrusion ist ein Schlüsselverfahren in der industriellen Produktion von Kunststoffen und Lebensmitteln. Die Hauptbestandteile einer Extrusionanlage sind der Extruder und das Extrudergetriebe. Der Extruder weist eine Zufuhreinrichtung auf, über die einem beheizten Extruderzylinder beispielsweise Kunststoffmaterial zugeführt wird. Innerhalb des Extruderzylinders verlaufen bei einem Doppelschneckenextruder zwei achsparallele Schneckenwellen, die das im Extruderzylinder aufgeschmolzene Kunststoffmaterial durch den Extruderzylinder fördern, homogenisieren und als extrudiertes Kunststoffmaterial an einer Ausgabedüse abgeben.

Das Extrudergetriebe dient zur Drehmomenten- und Drehzahlwandlung zwischen einem Antrieb, in der Regel ein Motor, und dem Extruder. Der Antrieb treibt eine antriebsseitig angeordnete Antriebswelle des Extrudergetriebes. Extruderseitig weist das Extrudergetriebe bei einem Doppelschneckenextruder zwei achsparallele Abtriebswellen auf, die die beiden Schneckenwellen antreiben.

Das Extrudergetriebe reduziert im Allgemeinen die Motordrehzahl auf die gewünschte, für den Extrusionsprozess optimale Schneckendrehzahl und baut gleichzeitig das erforderliche Drehmoment an den Schneckenwellen des Extruders auf. Des Weiteren werden die hohen Rückdruckkräfte aus dem Extrusionsprozess vom Extrudergetriebe aufgenommen und abgestützt. Der Getriebeaufbau wird im Wesentlichen von dem verhältnismäßig kleinen Achsabstand der Abtriebswellen und dem erforderlichen Abtriebsdrehmoment bestimmt. Beide Größen sind aus dem Extrusionsprozess vorgegeben. Die Spaltbreite zwischen den Extruderschneckengängen begrenzt die zulässige relative Verdrehung und die zulässige elastische axiale Verformung der Abtriebswellen zueinander.

Extrudergetriebe setzen sich in der Regel aus unterschiedlichen Stufen zusammen, insbesondere einer antriebsseitigen Eingangsstufe, einer extruderseitigen Ausgangsstufe, und einer dazwischen liegenden Verteilerstufe. Die Eingangsstufe ist als Reduktionsgetriebe ausgeführt und wandelt die Motordrehzahl in die erforderliche Abtriebsdrehzahl um und stellt das Abtriebsdrehmoment bereit. Das hohe Abtriebsdrehmoment verlangt dabei besondere konstruktive Maßnahmen für die Leistungsverzweigung, wobei im Stand der Technik eine Vielzahl von Leistungsverzweigungen bekannt ist. Eine Möglichkeit stellt dabei ein 2-Wellengetriebe dar, bei dem die Verteilerstufe zwei Verteilerwellen aufweist. In der Ausgangsstufe werden Leistungsverzweigungen wieder vereint und auf eine Abtriebswelle abgegeben.

Für die unterschiedlichen Getriebestufen werden in der Regel kämmende Zahnräder in Form von außenverzahnten Stirnrädern mit Schrägverzahnungen verwendet. Die Schrägungsrichtung kann dabei links- oder rechtssteigend sein, sodass außenverzahnte Zahnradpaarungen immer ein Rad mit Rechtssteigung und eines mit Linkssteigung aufweisen. Der Schrägungswinkel wird dabei gegen die Mantellinie parallel zur Drehachse gemessen. Der einzelne Zahn wird bei Schrägverzahnung nicht plötzlich über seine gesamte Breite, sondern allmählich über seine gesamte Flankenfläche belastet. Dies führt zu höherer Belastbarkeit und besserer Laufruhe, sodass die Räder für große Beanspruchungen und hohe Drehzahlen geeignet sind. Nachteilig sind jedoch getriebebedingt auftretende Axialkräfte, die durch die Lager aufgenommen werden müssen. In der Regel wird daher bei der Auslegung eines Getriebes mit schrägverzahnten Stirnrädern versucht die Schrägungsrichtung zweier Stirnräder, die auf derselben Welle angeordnet sind, in dieselbe Richtung steigend auszuführen, damit die getriebebedingten Axialkräfte in dieser Welle gegensinnig orientiert sind und die resultierende Axialkraft somit minimiert wird.

Wie bereits erwähnt wurde kommt dem Extrudergetriebe als zentralem Bauteil einer Extrusionsanlage eine gewichtige Rolle zur Steigerung des Wirkungsgrades und der Betriebssicherheit zu. Hierbei wirken enorme Drehmomente und axiale Rückdruckkräfte aus dem Extrusionsprozess auf die Drucklager des Getriebes. Eine konstruktive Maßnahme diesen starken Belastungen gerecht zu werden besteht in der bereits erwähnten Leistungsverzweigung. Eine mögliche Vorgangsweise besteht etwa darin eine erste Abtriebswelle direkt mit einem ersten Abtriebsstirnrad der Eingangsstufe zu verbinden und somit von der Eingangsstufe direkt in die Ausgangsstufe durchzuführen. In der Verteilerstufe erfolgt eine Leistungsverzweigung auf zwei Verteilerwellen, sodass die Antriebsleistung zu 50% auf die erste Abtriebswelle und zu je 25% auf die beiden Verteilerwellen verteilt wird. In der Ausgangsstufe wird die Antriebsleistung der beiden Verteilerwellen wieder auf eine zweite Abtriebswelle vereinigt, sodass beide gleichsinnig betriebenen Abtriebswellen mit jeweils 50% Antriebsleistung beaufschlagt werden.

Eine weitere konstruktive Maßnahme bei Extrudergetrieben besteht in der geeigneten Ausführung der Lager zur Aufnahme der Axialkräfte aus dem Extrusionsprozess. So werden in der Regel Tandemlager insbesondere für die zweite Abtriebswelle verwendet. Tandemlager werden üblicher Weise dort eingesetzt, wo hohe Axialkräfte bei begrenztem radialen Einbauraum sicher aufgenommen werden müssen. Der Leistungsbereich bei Doppelschnecken-Extrudergetrieben bewegt sich in der Regel zwischen ca. 2 kW und 16 MW. Dementsprechend groß ist auch die Spanne der auftretenden Schnecken-Rückdruckkräfte, die von 2,5 kN bis 3400 kN reichen. Bedingt durch den kleinen Achsabstand der beiden hochbelasteten Schneckenwellen werden daher in herkömmlicher Weise Kombinationen von Tandemlager sowie Kombinationen von Tandemlager mit sonstigen Axiallagern eingesetzt.

Eine weitere konstruktive Maßnahme zur Verringerung der Belastungen der Lager durch Axialkräfte besteht in der Ausführung der Schrägverzahnung. Ein hoher Schrägungswinkel entlastet die Axialbelastung der Lager. Bei Extrudergetrieben finden daher üblicher Weise Schrägverzahnungen mit einem Schrägungswinkel von 20° Anwendung. Zudem wird in der Auslegung der Getriebe versucht, dass getriebebedingte Axialkräfte in den beiden Abtriebswellen in Richtung der extruderseitigen Ausgangsstufe orientiert sind, um die durch den Extrusionprozess bedingten Axialkräfte, die in Richtung der antriebsseitigen Eingangsstufe wirken, zumindest teilweise zu kompensieren und die Lager dadurch zu entlasten.

Zusätzlich zu den eingangs erwähnten Anwendungen von Extrudergetrieben in der industriellen Produktion von Kunststoffen und Lebensmitteln hat sich eine weitere Anwendung von Extrudergetrieben in der Herstellung von Batterien für elektrisch betriebene Fahrzeuge eröffnet, wobei eine Suspension in einem Extrusionprozess mittels eines Extruders als Elektrodenpaste extrudiert wird. Ein solches Verfahren wird etwa in der DE 102019205825 der Volkswagen AG beschrieben. Hierfür werden die Batterien insbesondere als elektrochemische Akkumulatoren, beispielsweise als Lithium-Ionen-Akkumulatoren, ausgeführt. Zur Erzeugung oder Bereitstellung einer ausreichend hohen Betriebsspannung weisen solche Batterien typischerweise mehrere einzelne Batteriezellen auf, welche modular verschaltet sind. Batterien der genannten Art weisen auf einer Batteriezellebene eine Kathode und eine Anode sowie einen Separator und einen Elektrolyten auf. Die Elektroden, also die Anode sowie die Kathode, sind aus einem jeweiligen Elektroden-Aktivmaterial hergestellt. Das Elektroden-Aktivmaterial ist hierbei Voraussetzung für eine leistungsstarke Batterie. Zur Verbesserung der elektrischen Eigenschaften sind die Elektroden-Aktivmaterialien häufig mit Leitpartikeln als Leitadditiv versetzt. Kohlenstoffbasierte Leitpartikel, beispielsweise ein Leitruß oder ein Leitgraphit, sind aufgrund ihrer hohen Leitfähigkeit ein wichtiger Bestandteil von Lithium-Ionen-Batterien, welche den Elektrodenwiderstand und somit den Innenwiderstand der Batterie reduzieren. Zur Herstellung von Batterien sind Extrusionsverfahren möglich, bei welchen die Elektroden der Batteriezellen aus einer plastischen Masse hergestellt werden, welche aus einem Düsenelement gepresst wird. Durch die Integration eines kontinuierlichen Extrusionsprozesses in die Lithium-Ionen-Batteriezellfertigung ist es aufgrund der hohen Effizienz des Mischprozesses möglich, die Prozesszeit und den Energiebedarf bei der Herstellung von Batterien deutlich zu reduzieren. Die Elektroden der Batterie bzw. der Batteriezellen werden hierbei mittels extrudierten Elektrodenpasten hergestellt.

Allerdings zeigt sich, dass die Verwendung herkömmlicher Extrudergetriebe, wie sie aus der industriellen Produktion von Kunststoffen und Lebensmitteln bekannt sind und von der Anmelderin seit vielen Jahren gebaut werden, bei der Fertigung von Batterien Schwierigkeiten verursachen. Diese Schwierigkeiten ergeben sich aus dem geforderten geringen Abstand der Abtriebswellen von etwa 1/10 mm und dem Axialspiel vor allem der zweiten Abtriebswelle. Dieses Axialspiel kann bei Berührung der Schnecken der Schneckenwellen zu Metallabrieb führen, der die im Extruder homogenisierte Elektrodenpaste verunreinigt und die Qualität der gefertigten Batterie beeinträchtigt.

Es besteht somit das Ziel der Erfindung darin Extrudergetriebe für die Herstellung elektrischer Batterien insbesondere hinsichtlich des Axialspiels an den Abtriebswellen zu optimieren.

Dieses Ziel wird durch die Merkmale von Anspruch 1 erreicht. Anspruch 1 bezieht sich auf ein Extrudergetriebe für einen Doppelschneckenextruder mit einer antriebsseitigen Eingangsstufe umfassend ein Antriebsstirnrad, das mit einem eine erste Abtriebswelle antreibenden, ersten Abtriebsstirnrad in Schrägverzahnung kämmt, mit einer Verteilerstufe umfassend ein auf der ersten Abtriebswelle angeordnetes Verteilerantriebsstirnrad, das mit einem eine erste Verteilerwelle antreibenden, ersten Verteilerstirnrad in Schrägverzahnung kämmt sowie mit einem eine zweite Verteilerwelle antreibenden, zweiten Verteilerstirnrad in Schrägverzahnung kämmt, und einer extruderseitigen Ausgangsstufe umfassend ein auf der ersten Verteilerwelle angeordnetes, erstes Ausgangsstirnrad, das mit einem eine zweite Abtriebswelle antreibenden, zweiten Abtriebsstirnrad in Schrägverzahnung kämmt sowie ein auf der zweiten Verteilerwelle angeordnetes, zweites Ausgangsstirnrad, das mit dem zweiten Abtriebsstirnrad in Schrägverzahnung kämmt, wobei die Drehachsen der ersten Abtriebswelle, der ersten und zweiten Verteilerwelle sowie der zweiten Abtriebswelle parallel zueinander angeordnet sind. Erfindungsgemäß wird hierbei vorgeschlagen, dass der Schrägungswinkel der Schrägverzahnung am zweiten Abtriebsstirnrad weniger als 15° beträgt und die Schrägungsrichtung am zweiten Abtriebsstirnrad so gewählt ist, dass bei einer vorgegebenen Drehrichtung getriebebedingte Axialkräfte in der zweiten Abtriebswelle in Richtung der antriebsseitigen Eingangsstufe orientiert sind.

Die erfindungsgemäßen Merkmale beruhen auf der Beobachtung, dass der Prozessdruck bei der Extrusion von Elektrodenpasten viel geringer ist als bei herkömmlichen Anwendungen in der Kunststoff- oder Lebensmitteltechnik. Im Gegenteil handelt es sich bei der Extrusion von Elektrodenpasten um in der Regel annähernd drucklose Anwendungen, wobei dennoch ein zeitweise hoher Betriebsdruck nicht auszuschließen ist. Unter diesen Bedingungen eines breit variierenden Betriebsdruckes ist eine weitestgehende Axialspielfreiheit an den beiden gleichsinnig umlaufenden Abtriebswellen sicherzustellen. Erfindungsgemäß gelingt das durch Wahl eines im Vergleich zu herkömmlichen Ausführungen geringen Schrägungswinkels am zweiten Abtriebsstirnrad von weniger als 15° in Kombination mit einer im Vergleich zu herkömmlichen Ausführungen umgekehrten Schrägungsrichtung am zweiten Abtriebsstirnrad, sodass bei einer vorgegebenen Drehrichtung getriebebedingte Axialkräfte in der zweiten Abtriebswelle in Richtung der antriebsseitigen Eingangsstufe orientiert sind. Die getriebebedingten Axialkräfte lassen sich bei der Auslegung eines Getriebes berechnen und hängen in ihrer Orientierung sowie Größe in erster Linie vom Schrägungswinkel, von der Schrägungsrichtung, und von der Drehrichtung ab. Der Schrägungswinkel ist erfindungsgemäß unter 15° zu wählen. Da die Drehrichtung durch den Extrusionsprozess vorgegeben ist, ist somit lediglich die Schrägungsrichtung entsprechend zu wählen, damit die getriebebedingte Axialkräfte in der zweiten Abtriebswelle in Richtung der antriebsseitigen Eingangsstufe orientiert sind. Es wurde festgestellt, dass diese Maßnahmen an der Ausgangsstufe des Extrudergetriebes das Axialspielproblem beheben und somit eine entscheidend höhere Betriebssicherheit im Extrusionsprozess zur Herstellung elektrischer Batterien gewährleistet. Vorzugsweise kann der Schrägungswinkel der Schrägverzahnung am zweiten Abtriebsstirnrad weniger als 12° betragen, sowie vorzugsweise weniger als 10°. Nach den derzeitigen Erfahrungen der Anmelderin erweist sich ein Schrägungswinkel der Schrägverzahnung am zweiten Abtriebsstirnrad zwischen 5° und 7° als optimal.

Des Weiteren wird vorgeschlagen, dass bei einer vorgegebenen Drehrichtung getriebebedingte Axialkräfte auch in der ersten Abtriebswelle in Richtung der antriebsseitigen Eingangsstufe orientiert sind. Das kann beispielsweise erreicht werden, indem die Schrägungsrichtungen am ersten Abtriebsstirnrad und am Verteilerantriebsstirnrad in dieselbe Richtung orientiert sind, wobei der Schrägungswinkel am ersten Abtriebsstirnrad kleiner ist als am Verteilerantriebsstirnrad.

Hinsichtlich der Wahl des Schrägungswinkels am ersten Abtriebsstirnrad und am Verteilerantriebsstirnrad wird vorgeschlagen, dass der Schrägungswinkel am ersten Abtriebsstirnrad und am Verteilerantriebsstirnrad jeweils aus dem Wertebereich vom 1.5- bis 2.5-fachen des Schrägungswinkels am zweiten Abtriebsstirnrad (19) ausgewählt ist, jedoch maximal 20° beträgt.

Gemäß einer konkreten Ausführung eines erfindungsgemäßen Extrudergetriebes wird dabei vorgeschlagen, dass die Schrägungsrichtung am ersten Abtriebsstirnrad sowie am Verteilerantriebsstirnrad jeweils rechtssteigend ausgeführt ist, am ersten Verteilerstirnrad sowie am zweiten Verteilerstirnrad jeweils linkssteigend, am ersten Ausgangsstirnrad sowie am zweiten Ausgangsstirnrad jeweils rechtssteigend und am zweiten Abtriebsstirnrad linkssteigend ausgeführt ist.

Für eine umgekehrte Drehrichtung wird in entsprechender Weise vorgeschlagen, dass die Schrägungsrichtung am ersten Abtriebsstirnrad sowie am Verteilerantriebsstirnrad jeweils linkssteigend ausgeführt ist, am ersten Verteilerstirnrad sowie am zweiten Verteilerstirnrad jeweils rechtssteigend, am ersten Ausgangsstirnrad sowie am zweiten Ausgangsstirnrad jeweils linkssteigend und am zweiten Abtriebsstirnrad rechtssteigend ausgeführt ist.

In beiden Fällen ergeben sich in den beiden Verteilerwellen jeweils sich addierende Axialkräfte, was aber bei den geringeren Belastungen im Zuge der Extrusion von Elektrodenpasten in Kauf genommen werden kann.

Die Erfindung wird in weiterer Folge anhand der beiliegenden Figuren näher erläutert. Es zeigen dabei die
Fig. 1 eine schematische Darstellung einer Extrusionsanlage mit einem Extruder, einem Extrudergetriebe und einem Antrieb,
Fig. 2a eine Stirnansicht eines Extrudergetriebes gemäß der Erfindung,
Fig. 2b eine Schnittansicht des Extrudergetriebes der Fig. 2a gemäß der Schnittebene A-A, und die
Fig. 2c eine Schnittansicht des Extrudergetriebes der Fig. 2a gemäß der Schnittebene B-B.

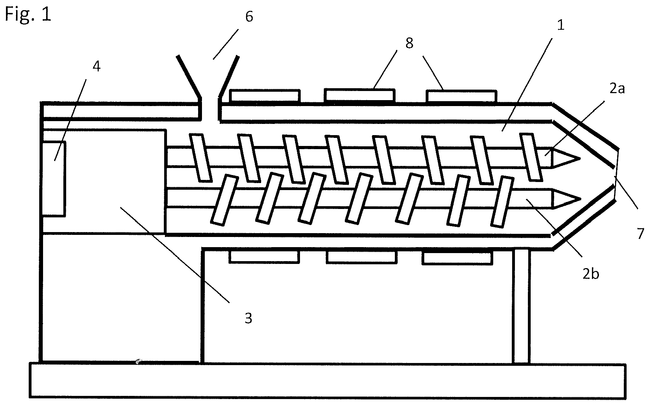

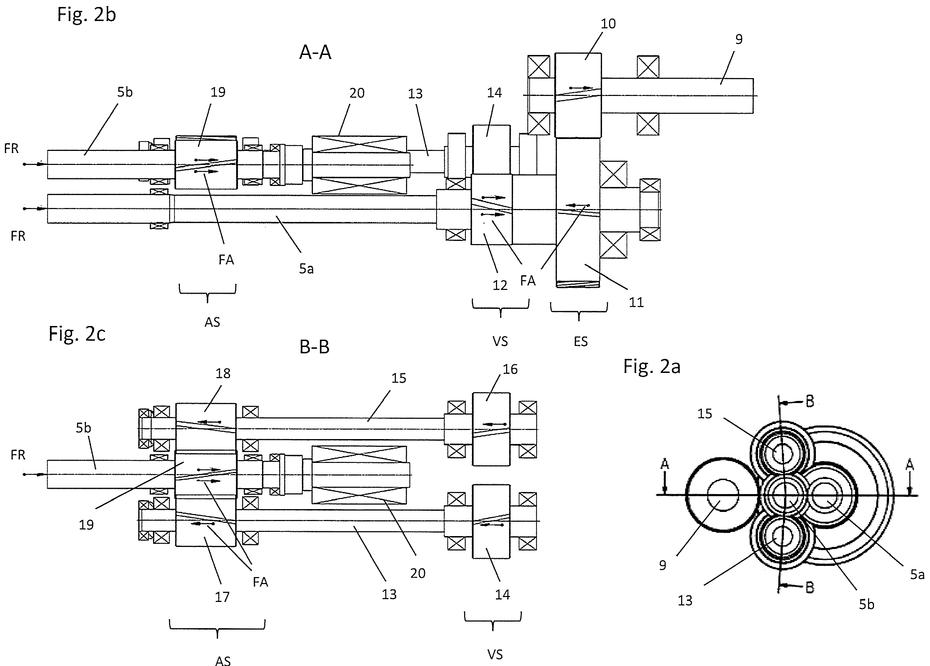

Zunächst wird auf die Fig. 1 Bezug genommen, um einen herkömmlichen Aufbau einer Extrusionsanlage zu erläutern. Die Hauptkomponenten einer solchen Anlage sind der Extruder 1, der in der gezeigten Ausführungsform der Fig. 1 als Doppelschneckenextruder mit zwei Schneckenwellen 2a, 2b ausgeführt ist, das Extrudergetriebe 3 für die beiden Schneckenwellen 2a, 2b und der Antriebsmotor 4. Das Extrudergetriebe 3 wandelt die Motordrehzahl des Antriebsmotors 4 in eine auf den Extrusionsprozess abgestimmte Schneckendrehzahl um und verzweigt die Antriebsleistung auf zwei eng nebeneinander angeordnete Abtriebswellen 5a, 5b (siehe Fig. 2), die das Drehmoment an die Schneckenwellen 2a, 2b weitergeben. Über eine Zufuhreinrichtung 6 wird den Schneckenwellen 2a, 2b das zu extrudierende Material zugeführt, das mit Hilfe der beiden rotierenden Schneckenwellen 2a, 2b durch den mittels einer Heizeinrichtung 8 beheizten Extruder 1 gefördert und dabei aufgeschmolzen wird und als extrudiertes Material an einer Ausgabedüse 7 abgegeben wird. Das Extrudergetriebe 3 stellt dabei sicher, dass über die erste Abtriebswelle 5a und über die zweite Abtriebswelle 5b etwa gleichmäßig viel Drehmoment abgegeben wird. Aufgrund des engen Innenraums des Extruders 1 ist der Achsabstand der beiden Schneckenwellen 2a, 2b und somit auch der Achsabstand der beiden Abtriebswellen 5a, 5b relativ klein.

In weiterer Folge wird Bezug auf die Fig. 2 genommen, die eine erfindungsgemäße Ausführung eines Extrudergetriebes 3 zeigt. Die Fig. 2a zeigt dabei eine Stirnansicht eines Extrudergetriebes 3 mit den eingezeichneten Schnittebenen A-A und B-B, wobei die Fig. 2b die Schnittansicht des Extrudergetriebes 3 der Fig. 2a gemäß der Schnittebene A-A wiedergibt, und die Fig. 2c die Schnittansicht des Extrudergetriebes 3 der Fig. 2a gemäß der Schnittebene B-B. In der Fig. 2b ist zunächst ein auf einer Antriebswelle 9 angeordnetes Antriebsstirnrad 10 zu sehen. Die Antriebswelle 9 wird von einem in der Fig. 2 nicht dargestellten Antriebsmotor 4 angetrieben. Das Antriebsstirnrad 10 kämmt mit einem ersten Abtriebsstirnrad 11 in Schrägverzahnung, das die erste Abtriebswelle 5a antreibt. Die erste Abtriebswelle 5a ist in eingezeichneten aber in der Fig. 2 nicht näher bezeichneten Radial- und Axiallagern gelagert. Das Antriebsstirnrad 10 und das Abtriebsstirnrad 11 bilden eine Eingangsstufe ES.

Auf der ersten Abtriebswelle 5a ist des Weiteren ein Verteilerantriebsstirnrad 12 angeordnet, das mit einem eine erste Verteilerwelle 13 antreibenden, ersten Verteilerstirnrad 14 in Schrägverzahnung kämmt, sowie mit einem eine zweite Verteilerwelle 15 antreibenden, zweiten Verteilerstirnrad 16. Auch die erste Verteilerwelle 13 und die zweite Verteilerwelle 15 sind jeweils in eingezeichneten aber in der Fig. 2 nicht näher bezeichneten Radial- und Axiallagern gelagert. Das Verteilerantriebsstirnrad 12 sowie das erste Verteilerstirnrad 14 und das zweite Verteilerstirnrad 16 bilden eine Verteilerstufe VS.

An die Verteilerstufe VS schließt eine extruderseitige Ausgangsstufe AS an, die ein auf der ersten Verteilerwelle 13 angeordnetes, erstes Ausgangsstirnrad 17 umfasst, ein auf der zweiten Verteilerwelle 15 angeordnetes, zweites Ausgangsstirnrad 18, sowie ein zweites Abtriebsstirnrad 19, das mit dem ersten Ausgangsstirnrad 17 und dem zweiten Ausgangsstirnrad 18 kämmt und eine zweite Abtriebswelle 5b antreibt (siehe Fig. 2c). Die Lagerung der zweiten Abtriebswelle 5b umfasst ein Tandemlager 20. Die Drehachsen der ersten Abtriebswelle 5a, der ersten Verteilerwelle 13, der zweiten Verteilerwelle 15 sowie der zweiten Abtriebswelle 5b sind parallel zueinander angeordnet.

In der Fig. 2b und 2c sind zudem die betriebsbedingten Rückdruckkräfte FR sowie die getriebebedingten Axialkräfte FA als Pfeile eingezeichnet, zudem ist die Schrägungsrichtung in den schrägverzahnten Stirnrädern angedeutet sowie deren Schrägungswinkel. In der gezeigten Ausführungsform ist die Schrägungsrichtung am ersten Abtriebsstirnrad 11 sowie am Verteilerantriebsstirnrad 12 jeweils rechtssteigend ausgeführt, am ersten Verteilerstirnrad 14 sowie am zweiten Verteilerstirnrad 16 jeweils linkssteigend, am ersten Ausgangsstirnrad 17 sowie am zweiten Ausgangsstirnrad 18 jeweils rechtssteigend und am zweiten Abtriebsstirnrad 19 linkssteigend. Der Schrägungswinkel der Schrägverzahnung am zweiten Abtriebsstirnrad 19 beträgt in der gezeigten Ausführungsform jeweils 6° und am ersten Abtriebsstirnrad 11 11°. Der Schrägungswinkel am Verteilerantriebsstirnrad 12 wurde mit 12° gewählt. Diese Auslegung des Getriebes bedingt die in den Fig. 2b und 2c als FA eingezeichneten Axialkräfte. Es ist zu sehen, dass bei der in der Fig. 2b und 2c vorgegebenen Drehrichtung der Antriebswelle 9 gegen den Uhrzeigersinn getriebebedingte Axialkräfte im zweiten Abtriebsstirnrad 19 und somit in der zweiten Abtriebswelle 5b in Richtung der antriebsseitigen Eingangsstufe orientiert sind. Da der Schrägungswinkel am ersten Abtriebsstirnrad 11 kleiner ist als am Verteilerantriebsstirnrad 12, ist auch die getriebebedingt erzeugte Axialkraft im ersten Abtriebsstirnrad 11, die in Richtung der extruderseitigen Ausgangsstufe AS orientiert ist, kleiner als die getriebebedingt erzeugte Axialkraft am Verteilerantriebsstirnrad 12, die in Richtung der antriebsseitigen Eingangsstufe ES orientiert ist. Die resultierende Axialkraft in der ersten Abtriebswelle 5a ist somit in Richtung der antriebsseitigen Eingangsstufe ES orientiert.

Mithilfe der erfindungsgemäßen Merkmale lässt sich das Axialspielproblem an der zweiten Abtriebswelle 5b beheben, wodurch eine entscheidend höhere Betriebssicherheit im Extrusionsprozess zur Herstellung elektrischer Batterien gewährleistet wird.

## Patentansprüche

1. Extrudergetriebe (3) für einen Doppelschneckenextruder mit einer antriebsseitigen Eingangsstufe (ES) umfassend ein Antriebsstirnrad (10), das mit einem eine erste Abtriebswelle (5a) antreibenden, ersten Abtriebsstirnrad (11) in Schrägverzahnung kämmt, mit einer Verteilerstufe (VS) umfassend ein auf der ersten Abtriebswelle (5a) angeordnetes Verteilerantriebsstirnrad (12), das mit einem eine erste Verteilerwelle (13) antreibenden, ersten Verteilerstirnrad (14) in Schrägverzahnung kämmt sowie mit einem eine zweite Verteilerwelle (15) antreibenden, zweiten Verteilerstirnrad (16) in Schrägverzahnung kämmt, und einer extruderseitigen Ausgangsstufe (AS) umfassend ein auf der ersten Verteilerwelle (13) angeordnetes, erstes Ausgangsstirnrad (17), das mit einem eine zweite Abtriebswelle (5b) antreibenden, zweiten Abtriebsstirnrad (19) in Schrägverzahnung kämmt sowie ein auf der zweiten Verteilerwelle (15) angeordnetes, zweites Ausgangsstirnrad (18), das mit dem zweiten Abtriebsstirnrad (19) in Schrägverzahnung kämmt, wobei die Drehachsen der ersten Abtriebswelle (5a), der ersten und zweiten Verteilerwelle (13, 15) sowie der zweiten Abtriebswelle (5b) parallel zueinander angeordnet sind, **dadurch gekennzeichnet, dass** der Schrägungswinkel der Schrägverzahnung am zweiten Abtriebsstirnrad (19) weniger als 15° beträgt und die Schrägungsrichtung am zweiten Abtriebsstirnrad (19) so gewählt ist, dass bei einer vorgegebenen Drehrichtung getriebebedingte Axialkräfte in der zweiten Abtriebswelle (5b) in Richtung der antriebsseitigen Eingangsstufe (ES) orientiert sind.

2. Extrudergetriebe nach Anspruch 1, **dadurch gekennzeichnet, dass** der Schrägungswinkel der Schrägverzahnung am zweiten Abtriebsstirnrad (19) weniger als 12° beträgt.

3. Extrudergetriebe nach Anspruch 1, **dadurch gekennzeichnet, dass** der Schrägungswinkel der Schrägverzahnung am zweiten Abtriebsstirnrad (19) weniger als 10° beträgt.

4. Extrudergetriebe nach Anspruch 1, **dadurch gekennzeichnet, dass** der Schrägungswinkel der Schrägverzahnung am zweiten Abtriebsstirnrad (19) zwischen 5° und 7° beträgt.

5. Extrudergetriebe nach einem der Ansprüche 1 bis 4, **dadurch gekennzeichnet, dass** die Schrägungsrichtung am ersten Abtriebsstirnrad (11) und am Verteilerantriebsstirnrad (12) in dieselbe Richtung orientiert sind, wobei der Schrägungswinkel am ersten Abtriebsstirnrad (11) kleiner ist als am Verteilerantriebsstirnrad (12).

6. Extrudergetriebe nach einem der Ansprüche 1 bis 5, **dadurch gekennzeichnet, dass** der Schrägungswinkel am ersten Abtriebsstirnrad und am Verteilerantriebsstirnrad jeweils aus dem Wertebereich vom 1.5- bis 2.5-fachen des Schrägungswinkels am zweiten Abtriebsstirnrad (19) ausgewählt ist, jedoch maximal 20° beträgt.

7. Extrudergetriebe nach einem der Ansprüche 1 bis 6, **dadurch gekennzeichnet, dass** die Schrägungsrichtung am ersten Abtriebsstirnrad (11) sowie am Verteilerantriebsstirnrad (12) jeweils rechtssteigend ausgeführt ist, am ersten Verteilerstirnrad (14) sowie am zweiten Verteilerstirnrad (16) jeweils linkssteigend, am ersten Ausgangsstirnrad (17) sowie am zweiten Ausgangsstirnrad (18) jeweils rechtssteigend und am zweiten Abtriebsstirnrad (19) linkssteigend ausgeführt ist.

8. Extrudergetriebe nach einem der Ansprüche 1 bis 6, **dadurch gekennzeichnet, dass** die Schrägungsrichtung am ersten Abtriebsstirnrad (11) sowie am Verteilerantriebsstirnrad (12) jeweils linkssteigend ausgeführt ist, am ersten Verteilerstirnrad (14) sowie am zweiten Verteilerstirnrad (16) jeweils rechtssteigend, am ersten Ausgangsstirnrad (17) sowie am zweiten Ausgangsstirnrad (18) jeweils linkssteigend und am zweiten Abtriebsstirnrad (19) rechtssteigend ausgeführt ist.
